# EUROPÄISCHE PATENTANMELDUNG

(11) **EP 2 184 753 A1**
(43) Veröffentlichungstag der Anmeldung: **12.05.2010**
(21) Anmeldenummer: 09175671.8
(22) Anmeldetag: 11.11.2009
(51) Int. Cl.: H01H 23/28

(54) **Beleuchteter Mehrwegeschalter für elektrische Verbraucher in einem Gebäudestromnetz**

(30) Priorität: 11.11.2008 DE 202008014935 U; 15.11.2008 DE 202008015069 U
(71) Anmelder: Aizo AG, 35578 Wetzlar (DE)
(72) Erfinder: Beck, Wilfried, 65191 Wiesbaden (DE)
(74) Vertreter: Englaender, Klaus

(57) **Zusammenfassung**

Mehrwegeschalter, wobei der Schalter unter mehr als einer der Betätigungsflächen eine sequentiell andersfarbige Beleuchtung auszugeben in der Lage ist und wobei eine jede dieser Beleuchtungsfarben einem Schaltzustand mit Hilfe der Steuerelektronik einem Schaltzustand fest zuordenbar ist.

## Beschreibung

Die Erfindung bezieht sich auf einen Mehrwegeschalter mit einer Steuerelektronik zum Bewirken von Zustandsänderungen von mit jeweils einem individuellen Empfangselement versehenen elektrischen Verbrauchern in einem Gebaüdestromnetz.

Der Stand der Technik lehrt in der DE 20 2008 005338.2 ein Ortungssystem für Einrichtungsgegenstände, gemäß dessen ein Ortungssignalgeber und ein Ortungssignalempfänger derart zusammenwirken, daß durch dieses Zusammenwirken die räumliche Position des Einrichtungsgegenstands im Gebäude identifizierbar ist

Der Stand der Technik lehrt außerdem in der DE 20 2006 024 994 eine schwimmende Lagerung für einen Wippmeclianisinus mit mehreren Freiheitsgraden für einen elektronischen Schalter mit ebener Betätigungsfläche.

Der Stand der Technik lehrt außerdem in der DE 20 2007 005 362 einen Taster mit ebener Betätigungsfläche, welcher mit Hilfe einer LED diverse Farben anzuzeigen in der Lage ist.

Der Stand der Technik lehrt außerdem in der DE 100 46 748 eine Wipptastenanordnung zum Einstellen eines Kfz-Außenspiegels mit ebener Betätigungsfläche, bei welcher die Wippanordnung eine Betätigung von Betätigungsorgan und einer unabhängigen zentralen Zusatzdrucktaste unabhängig voneinander ermöglicht.

Es ist außerdem allgemein bekannt, dass insbesondere im Bereich der Haustechnik eine Vielzahl von elektrischen Verbrauchern, wie mehrere Lampen, Jalousien, Musikanlagen, Radios, Fernseh- und Videogerät Klimageräte, Alarmanlagen usw. in einem Raum oder in mehreren Bereichen nur über eine entsprechende Anzahl von Schaltern, gegebenenfalls Fernbedienungen, Displays usw. gesteuert werden, in dem die Schalter ihre Steuerbefehle an das zugeordnete Gerät senden.

Hierbei sei beispielhaft nur auf die klassische Schaltung einer Lampe "Ein/Aus" mittels eines Wandschalters hingewiesen. Dem gemäß sind eine Vielzahl von Schaltern notwendig, deren Zahl umso größer ist, je größer eine Gruppe von Verbrauchern oder aber je mehr Verbraucher mit verschiedenen Funktionen vorhanden sind.

Hierbei soll im Weiteren unter dem Begriff "Schalter" jede Art von Schaltelement verstanden werden, das einen Schaltvorgang und eine Zustandsänderung des jeweiligen Verbrauchers bewirkt.

Unter dem Begriff "Verbraucher" werden im Weitren alle elektrisch steuerbaren Geräte verstanden.

Zur Steuerung von mehreren elektrischen Verbrauchern in einem Raum oder Bereich sind demnach Schalter mit einer höheren Anzahl von Sensoren und Tastern mit komplizierterem Aufbau und Untergliederung notwendig. Je vielzahliger und komplexer jedoch die Schalter sind, umso größer sind die Anforderungen bei der Bedienung an den Nutzer.

Umfangreiche Schaltermengen führen bei nicht wenigen Nutzern zu Verwirrung und Komplikationen beziehungsweise sogar zu Bedienungsängsten und Bedienungsablehnungen. Daher sind Mehrwegeschalter entwickelt worden, mit denen verschiedene Zustandsänderungen, d.h. Schaltzustände verschiedener elektrischer Verbraucher gesteuert werden können.

Benannt ist ein solcher Mehrwegeschalter mit einer Steuerelektronik und mit einem Trägerelement, das eine zu bedienende, am Trägerelement in mindestens drei Richtungen bewegliches Betätigungselement mit einer Mehrzahl von Betätigungsflächen aufweist. Dabei bewirkt jede Betätigung des Betätigungselement mindestens einen Schaltvorgang für mindestens einen elektrischen Verbraucher oder mindestens eine Gruppe von elektrischen Verbrauchern. Sämtliche Schaltvorgänge an den Verbrauchern können durch lokale Betätigung des Betätigungselement ausgelöst werden. Das Betätigungselement des Mehrwegeschalters besitzt eine ebene, d.h. plane Oberfläche, wobei die Mehrzahl von Betätigungsflächen Bestandteil dieser Oberfläche sind und als solche taktil und/oder visuell gar nicht wahrgenommen werden.

Wer normale klassische Taster und Schalter zu betätigen gewohnt ist, drückt diesen in der Regel nicht zwangsläufig in dessen Zentrum, sondern an einer beliebigen Teilfläche der Schalteroberfläche. Dem gemäß ist der zuvor beschriebene Mehrwegeschalter überall an seiner Oberfläche drückbar. Somit drücken viele Nutzer den Schalter häufig nur außerhalb dessen Mitte. Bei einem Mehrwegeschalter kann dies zu Fehlfunktionen führen, da Teilflächen gedrückt werden, die mit Funktionen behaftet sind, die der Nutzer gar nicht zu aktivieren beabsichtigt, d.h. es kommt zu Fehlbedienungen an den angeschlossenen elektrischen Verbrauchern.

Es ist Aufgabe der Erfindung, einen Mehrwegeschalter der eingangs genannten Art zu schaffen, der einem Nutzer nahe legt, den Schalter in dessen Mitte zu betätigen, um eine sicherere und komfortablere Steuerung der mit dem Mehrwegeschalter verbundenen elektrischen Verbraucher zu gewährleisten.

Erfindungsgemäß wird die Aufgabe gelöst durch einen Mehrwegeschalter mit einer Steuerelektronik zum Bewirken von Zustandsänderungen von mit jeweils einem individuellen Empfangselement für diese Zustandsänderungen versehenen elektrischen Verbrauchern in einem Gebäudestromnetz, also wobei die elektrischen Verbraucher im Gebäudestromnetz des Schalters angeschlossen sind, und wobei der Mehrwegeschalter ein Trägerelement, aufweist, zumindest ein zu bedienendes Betätigungselement das eine Mehrzahl von Betätigungsflachen umfasst, wobei das Betätigungselement beweglich auf dem Trägerelement angebracht ist, und wobei das Betätigungselement relativ zum Trägerelement bewegbar ist, und wobei jede Betätigung des Betätigungselements mindestens einen Schaltvorgang für mindestens einen der Verbraucher oder mindestens eine Gruppe von diesen Verbrauchern bewirkt, und wobei sämtliche Schaltvorgänge, also jeder einzelne dieser Schaltvorgänge an dem mindestens einen Verbraucher oder an der mindestens einen Gruppe von Verbrauchern durch lokale Betätigung einer Betätigungsfläche auslösbar sind, wobei mindestens eine der Betätigungsflächen erhaben, also aus dem Trägerelement herausragend ausgebildet ist, und wobei der Schalter unter mehr als einer der Betätigungsflächen eine sequentiell andersfarbige Beleuchtung auszugeben in der Lage ist und wobei eine jede dieser Beleuchtungsfarben einem Schaltzustand mit Hilfe der Steuerelektronik einem Schaltzustand fest zuordenbar ist.

Das individuelle Empfangselement ist geeignet, Schaltzustände des Schalters und/oder Daten über Schaltungszustände des Mehrwegeschalters zu empfangen und auszuwerten. Unter "Daten über Schaltungszustände des Mehrwegeschalters" wird verstanden, daß der Schaltzustand in einen Befehl in Gestalt eines Datensatzes erzeugt wird und dieser Datensatz vom Schalter ausgegeben wird und vom individuellen Empfangselement erkannt und umgesetzt wird.

Praktisch ist dies umsetzbar, indem im Schalter mit Hilfe der Steuerungselektronik des Schalters als Schaltvorgang ein Schaltbefehl erzeugt wird, und der Schalter gerade nicht die 220Volt / 110Volt schaltet, indem er die Leitung trennt. Vielmehr bleibt im Rahmen des Schaltvorgangs entweder die Versorgung mit Hilfe der Leitung des Gebäudestromnetzes bestehen und der Schaltbefehl wird in Gestalt von mit Hilfe der Steuerungselektronik erzeugter Schaltdaten z.B. über den an der Leitung anliegenden Sinus transportiert, indem diese Daten dem Sinus beispielsweise mit Hilfe von HF und/oder mit Hilfe von Wirkleistungsmodulation, wie z.B. in der EP 1 675 274 "Verfahren zur Datenübertragung..." beschrieben, oder auf andere Weise mit Hilfe der Stromleitung zum Verbraucher übertragen werden. Alternativ findet über die Leitung keine Versorgung statt und die Leitung dient nur dazu, der diese Daten vom Schalter zum individuellen Empfangselement des elektronischen Verbrauchers zu transportieren.

Der Mehrwegeschalter überträgt seine Schaltsignale vorzugsweise über das Gebäudestromnetz an die Verbraucher, die mit einem individuellen Empfangselement ausgerüstet sind. Dieses Empfangselement kann eine elektronische Einrichtung, beispielsweise Transponder oder ein Mikrochip sein, in dem eine codierte Kennung gespeichert ist, so dass nur der gewünschte Verbraucher auf den Schaltvorgang und die entsprechenden Steuerbefehle des Mehrwegeschalters reagiert.

Im Empfangselement des Verbrauchers werden diese Befehlsdaten dann ausgewertet und der dem Schaltbefehl korrespondierende Schaltvorgang wird vor Ort im Verbraucher eingeleitet. Dieser korrespondierende Schaltbefehl kann mit anderen Schaltbefehlen in einem Speicher des Schalters und/oder in einem Speicher des Empfangselements des Verbrauchers hinterlegt sein.

Das gleiche gilt auch für Verbraucherguppen.

Wenn das Betätigungselement mindestens einen Schaltvorgang für mindestens einen der Verbraucher oder mindestens eine Gruppe von diesen Verbrauchern bewirkt, so bewirkt dies, daß mit einem Betätigungselement mehrere Verbraucher(gruppen) geschalten werden können. So kann einer dieser Schalter beispielsweise in seiner z.B. quadratischen Gestalt einen Raum repräsentieren und ergonomisch hierzu an der zentralen Position den Deckenlüster, in der vorderen Position die an der vorderen korrespondierenden Wand hängenden Wandlampen, an der unteren Position die dort untere Lampe, in der die an der rechten korrespondierenden Position befindliche Sandlampe und die an der linken korrespondierenden Position befindliche Leselampe schalten.

Ein solcher Mehrwegeschalter, wobei der Schalter an mindestens einer Ecke und/oder an mindestens einer Kante des Betätigungselements und/oder im Zentrum des Betätigungselements einen Schaltvorgang zu bewirken in der Lage ist, bewirkt eine große Einsparung an Schaltelementen. So können derartige Schalter an einer beliebigen Anzahl von Ecken und/oder Kanten geschalten werden.

Beispielhaft seien hierbei weiterhin nur (viereckige) Schalter erwähnt, die an allen (vier) Ecken und/oder allen vier) Kanten und/oder im Zentrum schaltbar sind.

Dabei ist, im Fall, daß nur die Ecken mit Anzeigevorrichtungen belegt sind, beispielsweise eine Anzeigeeinrichtung in einer Ecke beispielsweise für die Schaltung von Lampen eines oder mehrerer Räume, eine Anzeigeeinrichtung in einer anderen Ecke für die Schaltung von elektronischen Unterhaltungsgeräten, wie Fernsehgeräte, Audiogeräte usw., eine weitere Anzeigeeinrichtung in einer anderen Ecke für die Betätigung von Jalousien und wieder eine andere Anzeigeeinrichtung in einer Ecke für die Betätigung einer Alarmanlage vorgesehen, wobei die Zuordnung der Verbrauchergruppen durch Programmierung der Steuerelektronik des Wechselstromschalters verändert werden kann.

Dabei ist, im Fall, daß sowohl die Ecken, als auch die Kanten mit Anzeigevorrichtungen belegt sind. In diesem Fall macht das insgesamt acht Anzeigevorrichtungen pro Schalterecke/Kante und bei bis zu neun Bewegungsrichtungen (Zentralschalter hinzugefügt) damit bis zu neun Einzelschaltungen bzw. Verbraucher(gruppen) pro Betriebsebene möglich. Werden nun noch zusätzlich die Betriebsebenen vervielfacht dann wird diese Vervielfachung der Betriebsebene erfindungsgemäß durch zur Ebene korrespondierende Farben angezeigt, so vervielfacht sich die Schaltbarkeit dieses einen Schalters noch mit der Anzahl der Betriebsebenen. Der zentrale Schalter kann hierbei beispielsweise als Universalschalter für alle Ebnen genutzt werden, als Zentral-An-Aus-Knopf für die gesamte gegenwärtige Ebene beispielsweise, oder je nach Belegung auch als Zentral-An-Aus-Knopf für alle der vielen hinterlegten Ebenen, was z.B. in der Nähe einer Haustüre vorteilhaft ist.

So ist vorgesehen, dass mehr als eine Kante des Betätigungselementes mindestens einen Schaltvorgang für einen Verbraucher oder einer Gruppe von Verbrauchern bewirkt. Die oberen, unteren, rechten und linken Kanten des Betätigungselementes ermöglichen somit unterschiedliche Schaltvorgänge, die vom Nutzer intuitiv erkannt und benutzt werden. Die Kanten des Betätigungselementes können beispielhaft und bevorzugt folgende Bedienfunktionen umfassen:

**(Tabelle 1)**

| Kante | Funktionen |
|---|---|
| Oben | plus, heller, höher, mehr, lauter, wärmer |
| Unten | minus, dunkler, tiefer, weniger, leiser, kälter |
| Links | links, zurück, letztes |
| Rechts | rechts, weiter, nächstes |

Dabei beziehen sich die Schaltfunktionen nicht nur auf einen zu steuernden Verbraucher, beispielsweise ein Fernsehgerät, der an bzw, auszuschalten ist, sondern auch auf andere Funktionen, wie nächsten den Fernsehkanal wählen. Bei einer Lampe kann dies beispielsweise die Steuerung der Helligkeit oder das Hinzufügen weiterer Lampen sein, bei einem CDPlayer die Wahl des nächsten oder vorhergehenden Musiktitels, bei einer Jalousie die Einstellhöhe usw.

Des Weiteren bewirkt mehr als eine Ecke des Betätigungselementes mindestens einen Schaltvorgang für einen Verbraucher oder einer Gruppe von Verbrauchern. Demgemäß sind die Verbraucherarten den Ecken des Betätigungselementes des Wechselstromschalters zugeordnet, beispielsweise wie folgt:

**(Tabelle 2)**

| Ecke | Verbrauchergruppe |
|---|---|
| Oben links | Beleuchtung (Lampen) |
| Oben rechts | Audio/Video (Fernseher, CD-PLayer usw.) |
| Unten links | Schatten (Jalousien) |
| Unten rechts | Sicherheit (Alarmanlage) |

Dadurch daß mindestens eine dieser Betätigungsflächen erhaben ist, also aus dem Trägerelement herausragend ausgebildet ist, bietet sie sich dem Bediener ergonomisch als Betätigungsfläche an und vereinfacht die Umsetzung der Betätigung. Zwar gibt es Mehrwegschalter, bei welchen die Betätigungsfläche funktionell von ihrem Trägerelement abgesetzt ist, nicht aber ergonomisch. Bei derartigen Schaltern kann eine Betätigung einmal zu einer Schaltreaktion führen und einmal nicht, je nachdem, wo die Betätigungsfunktion durchgeführt wurde. Im Ergebnis erscheint dies für den Betätigenden mysthisch.

Wenn eine, zwei, drei, vier, fünf, sechs oder eine beliebige weitere Anzahl an Betätigungsflächen erhaben und somit gegenüber ihrer Umgebung abgegrenzt ist, kann durch eine präzisere Betätigungsführung ein präziserer Schaltvorgang durchgeführt werden. "Erhaben" bedeutet hierbei: "aus dem Trägerelement herausragend ausgebildet" zu sein.

Darüber hinaus können Schaltfunktionen unter nicht erhabenen Bereichen des Schalters "versteckt" werden.

Alternativ kann auch die gesamte Betätigungsfläche erhaben sein und sich zur Betätigung anbieten.

Das heißt, daß der Bediener intuitiv zu dieser erhabenen Betätigungsfläche geführt wird, was umgekehrt heißt, daß weitere Betätigungsfunktionen, welche sich außerdem noch im Schalter befinden für den Bediener nicht offensichtlich sind.

Indem der Schalter eine sequentiell andersfarbig Beleuchtung auszugeben in der Lage ist, kann der Bediener mit Hilfe dieser Farbe über die Betriebsebene des Schalters informiert werden. "Sequentiell andersfarbig" bedeutet:
"Sequentiell andersfarbig bunt" also im Sinn, daß jedes individuelle Beleuchtungselement des Schalters nacheinander eine andere Farbe einnehmen kann. "Sequentiell andersfarbig" bedeutet außerdem "Sequentiell andersfarbig uni", also daß ein jedes Beleuchtungselement dauerhaft eine einzige und vom benachbarten Element unterschiedene andere Farbe hat und daß diese Beleuchtungselemente mit ihrer je festen Farbe nacheinander an und wieder ausgeschalten werden.

So hat der Bediener die Möglichkeit zu erkennen, daß wenn sich die Farbe ändert, sich der Betriebszustand des Schalters geändert hat, was nichts anderes heißt, als daß mit diesem Schalter und der selben Schaltfunktion nun ein anderer Verbraucher / eine andere Verbrauchergruppe geschalten werden kann, als zuvor. Farbenwechsel ist somit erfindungsgemäß gleichbedeutend mit einem Verbraucher(gruppen)wechsel.

Wenn außerdem eine jede Beleuchtungsfarbe einem Schaltzustand fest zuordenbar ist, bedeutet dies, daß der Bediener nach freiem Gutdünken, beispielsweise mit Hilfe einer Software oder Hardwareumstellung die Farbe(n) mit den in Frage kommenden Verbraucher(gruppen) selbst zusammenstellen und im Schalter auf Dauer hinterlegen kann. Auf diese Weise können Verbraucher(gruppen) durch ihre Farbe repräsentiert werden. So kann insbesondere Rot die Verbraucher repräsentieren, die sicherheitsrelevant sind (z.B. Sicherheitstechnik); Gelb kann z.B. Verbraucher repräsentieren, die mit Licht zu tun haben; Blau kann beispielsweise Verbraucher repräsentieren, die mit der Klimatisation zu tun haben etc.

Wenn eine jede dieser Beleuchtungsfarben einem Schaltzustand mit Hilfe der Steuerelektronik einem Schaltzustand fest zuordenbar ist, dann bewirkt dies, daß die Festlegung der darzustellenden Farben nicht bereits fest einprogrammiert ist, sondern mit Hilfe der Steuerelektronik definierbar ist. Diese Definition mit Hilfe der Steuerelektronik kann in einem Speicher der Steuerungselektronik hinerlegt werden und bei Bedarf verändert werden.

Weitere Merkmale der Erfindung ergeben sich aus den Unteransprüchen.

Ein derartiger Mehrwegeschalter, wobei im Zentrum des Betätigungselements eine weitere Betätigungsfläche angeordnet ist, bewirkt, daß der Schalter um eine weitere Dimension erweitert wird.

Nach dieser Weiterbildung des erfindungsgemäßen Wechselstromschalters bewirkt das Zentrum des Betätigungselementes mindestens einen Schaltvorgang für einen Verbraucher oder einer Gruppe von Verbrauchern. Dabei wird eine Verbrauchergruppe, z.B. Lampen, in einer Ecke des Betätigungselements vorgewählt und dann bei Betätigung des Zentrums des Betätigungselementes z.B. ein Einschaltvorgang für die entsprechende Verbrauchergruppe gewählt.

Alternativ bewirkt der Schalter im Zentrum die Möglichkeit zwischen den Funktionsebenen des Mehrwegeschalters zu wechseln.

Dies ist insbesondere dann sinnvoll, wenn der Mehrwegeschalter nicht an seinen Ecken / Kanten eine jeweils andere Verbraucher(gruppe) zugeordnet hat, sondern wenn diese Verbrauchergruppen mit Hilfe des Zentrums des Mehrwegeschalters erst auszuwählen sind. Das macht insbesondere dann Sinn, wenn in einem Raum die Ecken/Kanten des Schalters die an den korrespondierenden Ecken/Wänden des Raums befindlichen Elektro(nischen)Geräte (wie z.B. Lampen) repräsentieren. In diesem Fall wandert man mit Hilfe des zentralen Tasters des Mehrwegeschalters durch die z.B. Verbrauchergruppen und wählt mit Hilfe der Kante / Ecke die jeweils korrespondierende Verbraucher(gruppe) aus, um sie dann mit weiteren Schaltfunktionen zu schalten.

Dem entsprechend bewirken mehr als eine Ecke und/oder mehr als eine Kante und/oder das Zentrum des Betätigungselementes mehr als einen Schaltvorgang für einen Verbraucher oder einer Gruppe von Verbrauchern.

Weiterhin zeigt das Zentrum des Betätigungselementes die jeweilige Farbe des aktuellen Schaltzustandes der jeweiligen Anzeigeeinrichtung an den Ecken des Betätigungselementes an. Wurde also beispielsweise die Verbrauchergruppe "Beleuchtung" gewählt, leuchtet das Zentrum des Betätigungselementes in gelber Farbe, bei der Wahl der Verbrauchergruppe "Schatten" leuchtet das Zentrum in grauer Farbe usw.

Wenn dieser Schalter außerdem die erhaben, also aus der Bedienfläche der Betätigungsplatte herausragend, oder erhaben und sequentiell andersfarbig beleuchtbar ausgebildet ist, so bewirkt dies, daß er leichter bedienbar ist.

Ein solcher Mehrwegeschalter wobei der Schalter an mindestens einer Ecke und/oder an mindestens einer Kante des Betätigungselements und/oder im Zentrum des Betätigungselements einen Schaltvorgang zu bewirken in der Lage ist, bewirkt, daß dieser Schalter vieldimensional einsetzbar ist.

In dieser Ausgestaltungsform kann das am Trägerelement beweglich aufgenommene Betätigungselement, welche die eigentliche Schalterplatte des Mehrwegeschalters darstellt, an den Ecken und Kanten und auch im Zentrum durch Druckbewegung betätigt werden, d.h. räumlich gesehen in alle möglichen Richtungen, so dass der Schalter als multidimensionaler Mehrwegeschalter wirkt und bei jeder Betätigung einen entsprechenden Schaltvorgang an einem entsprechenden elektrischen Verbraucher oder einer Verbrauchergruppe auslöst. Dabei werden die Kanten und die Ecken des Betätigungselements als Betätigungsflächen genutzt.

Im Fall, daß der Schalter keine Ecken aufweist, können andere geometrisch fest definierbare Orte mit diesen Funktionen belegt werden. Im Falle eines runden Betätigungselements kann dies statt der Ecke eine Einrastposition eines Drehschalters sein. Im Falle eines (z.B. runden) Tasters kann dies statt der Ecke der Ort der Tastbetätigung auf dem Betätigungselement des Tasters sein.

Eine Ausgestaltungsform des Mehrwegeschalters, bei dem das Betätigungselement relativ zum Trägerelement in mindestens drei Richtungen bewegbar ist, weist den Vorteil auf, daß. durch diese Multidimensionalität mehrere gleichseitige Eingabeebenen eröffnet werden.

In einer bevorzugten Ausführungsform kann in der Mitte eines eckigen Mehrwegeschalters ein zusätzlicher Taster vorgesehen, der gegenüber dem Betätigungselement erhaben ausgebildet ist, d.h. aus diesem hervorragt. Gemäß einer anderen Variante ist der Taster in Bezug zur Betätigungselement nicht nur erhaben, sondern auch beleuchtet ausgebildet.

Die Wahrscheinlichkeit, daß ein Nutzer die Mitte des Mehrwegeschalters, also den im Zentrum des Betätigungelements angeordneten Taster drückt, ist damit erheblich angestiegen. Fehlfunktionen des Schalters werden damit deutlich beschränkt, denn der mittige Taster drückt sich leichter als die übrigen Teilschaltflächen des Betätigungselements, weil sich das Drücken in diesem mittleren Bereich anbietet und die Botschaft, die Mitte des Schalters zu drücken, klarer ist und zwar durch die Erhabenheit und/oder Beleuchtung des zentralen Tasters. Die anderen Schaltfunktionen am Mehrwegeschalter sind aber immer noch vorhanden.

Ein Kenner des Mehrwegeschalters kann die beabsichtigte Schaltfunktion durch Drücken der entsprechenden Teilfläche der Oberfläche des Betätigungselement gezielt auswählen. Ein Nutzer hingegen, der den Schalter nicht als Mehrwegeschalter erkennt, drückt den mittigen Taster und würde gar nicht wahrnehmen oder beabsichtigen, die anderen Schalt bzw. Bedienflächen des Betätigungselements zu betätigen bzw. die entsprechenden Schaltfunktionen zu aktivieren. Bei einem Nutzer, der also die Schaltfunktionen des Mehrwegeschalters nicht kennt, wird die Aufmerksamkeit in der Regel durch die Erhabenheit und Beleuchtung des Mittentasters eben darauf hingelenkt sein. Er würde dabei gar nicht die Rand oder Eckflächen des Betätigungselements des Schalters betätigen. Der Mehrwegeschalter wird dadurch bediensicherer als einer, der eine rein plane Bedienfläche aufweist.

Nach einer Weiterbildung des Mehrwegeschalters ist der im Zentrum des Betätigungselements angeordnete Taster z.B. für einen Dauerimpuls, oder als Kippschalter für einen Schaltimpuls, z.B. AN/AUS, ausgebildet. Dies bewirkt auch in der Funktion eine weitere ergonomische Angrenzung zu den weiteren Schaltfunktionen des Mehrwegeschalters.

Ferner ist nach einer weiteren Ausgestaltung des erfindungsgemäßen Mehrwegeschalters der im Zentrum des Betätigungselements angeordnete Taster ein Tastschalter, Wipptaster, Wippschalter oder dergleichen.

Sonach ist der im Zentrum des Betätigungselements angeordnete Taster unabhängig von der sequentiell andersfarbigen Beleuchtung teilweise illuminierbar, und zwar vorzugsweise mit einer anderen Farbe als die der sequentiellen Beleuchtung. Beispielsweise ist die obere oder untere Hälfte dieses Tasters in einer schockfarbigen Illumination hinterlegt, während mindestens eine der Beleuchtungen in einer beliebigen Kombination der oben aufgeführten RAL-Farben sequentiell leuchtet. Eine derartige Zusatzillumination wird in der Regel ausreichend sein, um die Betätigungsabsicht durch den Benutzer auf den mittigen Taster zu lenken.

Des Weiteren kann bei dem erfindungsgemäßen Mehrwegeschalter der im Zentrum der Betätigungselement angeordnete Taster farblich illuminierbar und/oder sequentiell beleuchtet sein, wodurch die die Wahrnehmung des zentralen Tasters durch den Benutzer noch unterstützt wird.

Eine weitere Ausgestaltungsform des Mehrwegeschalters, bei dem das Trägerelement ein Leuchtelement und/oder Illuminationselement aufweist, wobei dieses derart angeordnet ist, und/oder das Betätigungselement derart gestaltet ist, daß die Illumination / Beleuchtung von außerhalb des Betätigungselements aus wahrnehmbar ist / sind, weist den Vorteil auf, daß es nicht durch Berührung des Betätigungselements verschmutzt wird. Darüber hinaus ist es auf dem Trägerelement keiner Betätigungsbewegung unterworfen, was die Defektanfälligkeit reduziert und den Aufbau und die Verdrahtung vereinfacht

Eine weitere Ausgestaltungsform des Mehrwegeschalters, bei dem das Leuchtelement und / oder Illuminationselement eine Ringform aufweist weist den Vorteil auf, daß es nicht mit einem anderen Lichtsignal verwechselt werden kann, da ringförmige Beleuchtungen im Haushalt ungewöhnlich sind, Darüber hinaus wird eine derartige Beleuchtung / Illumination beim Betätigen nicht verdeckt und der Bediener kann hierdurch insbesondere bei mehrfarbigen Leuchtelementen auch die neue Farbe nach der betätigungsbedingten Farbdarstellung erkennen, was von besonderem Vorteil ist, wenn der Bediener eine mehrere Schaltebenen, also mehrere Farben durchwandern muß, um zur angestrebten Bedienebene zu gelangen.

Eine weitere Ausgestaltungsform des Mehrwegeschalters, bei dem das Betätigungselement ein Leuchtelement aufweist, weist den Vorteil auf, daß der Bediener durch dieses Leuchtelement genau an den Punkt geführt wird, an welchem er dag Betätigungselement zu bedienen hat.

Eine weitere Ausgestaltungsform des Mehrwegeschalters, bei dem das Leuchtelement mehr als eine Farbe darzustellen in der Lage ist, weist den Vorteil auf, daß jedem Verbraucher bzw. jeder verbrauchergruppe eine eigene Bedienebene und mit jeder Bedienebene eine eigene Farne zuordenbar ist.

Eine weitere Ausgestaltungsform des Mehrwegeschalters, bei dem das Leuchtelement die Farben gelb, grau, hellblau, dunkelblau, violett, grün, rot darzustellen in der Lage ist, weist den Vorteil auf, daß durch die Unterschiedlichkeit dieser Farben keine Verwechslungsgefahr besteht und sie weist den Vorteil auf, daß der Bediener der/den Verbrauchergruppe/n diejenigen Farben zuordnen kann, von welchen er glaubt, daß diese am ergonomischsten repräsentiert werden. Dies bedeutet, daß der Verbraucher erfindungsgemäß selbst diese Zuordnung treffen kann und programmieren (lassen) kann.

Als Farben besonders bevorzugt kommen hierbei insbesondere in Frage: die Farben einer RGBLED und / oder neben Schwarz mindestens eine der Farben der Wellenlängen (in nm): 380-450 (Blau); 450-482 (GrünlichBlau); 482-487 (CyanBlau); 487-492 (BläulichGrün); 492-497 (Grün); 497-530 (GelblichGrün); 530-560 (GelbGrün); 560-570 (GrünlichGelb); 570-575 (Gelb); 575-580 (Gelblichorange); 580-585 (Orange); 585-595 (RötlichOrange); 59.5-620 (Rot); 620-780

Als Farben besonders bevorzugt kommen hierbei außerdem in Frage: die Farben einer RGBLED und / oder neben Schwarz mindestens eine der Farben:
Rot; insbesondere RAL 3002_2
Magenta; insbesondere RAL 3015_3
Grün; insbesondere RAL 6029_2
Gelb; insbesondere RAL 1017_7
cyan; insbesondere RAL 5012_10
Blau; insbesondere RAL 5017_07
Weiss; insbesondere RAL 016_12
Grau; insbesondere RAL 7004
bzw. eine beliebige Kombination hiervon.

Weiterhin kann im Zentrum des Betätigungselements ein Anzeigedisplay im Taster angeordnet sein, das unterschiedliche Farben, ziffern und andere Informationen, wie Temperatur, Uhrzeit, Schaltszenen, Bedienmodi und dergleichen darzustellen in der Lage ist.

Eine weitere Ausgestaltungsform des Mebrwegeschalters, wobei die Steuerungselektronik Schaltbefehle bereitstellt, welche mit Hilfe eines Schaltvorgangs des Mehrwegeschalters aktivierbar sind und welche zu dem individuellen Empfangselement eines elektrischen Verbrauchers übertragen wird und welche in diesem individuellen Empfangselement auswertbar sind, wobei im elektrischen Verbraucher der Übertragene Schaltbefehl umsetzbar ist, hat den Vorteil, daß beispielsweise der Mehrwegeschalter nicht die 220 Voltleitung im Schalter trennen muß, sondern dies mit Hilfe eines durch den Schaltbefehl ausgegebenen und mit Übertragungsmitteln zum individuellen Empfangselement eines elektrischen Verbrauchers übertragenen Befehls beim Verbraucher selbst geschehen kann.

Eine weitere Ausgestaltungsform des Mehrwegeschalters, wobei die Übertragung der Schaltbefehl über das Gebaudestromnetz erfolgt hat den Vorteil, daß eine vielerorts bereits bestehende Infrastruktur genutzt werden kann.

Eine weitere Ausgestaltungsform des Mehrwegeschalters, wobei der Schaltbefehl den Befehl des An/Ausschaltens und/oder der Leistungssteigerung/Leistungsreduktion und/oder einer Steuerungsfunktion eines Betriebszustands des Verbrauchers repräsentiert hat den Vorteil, daß jede dieser Funktionen oder eine beliebige Kombination davon nicht im Schalter, sondern direkt am/im elektrischen Verbraucher durchgeführt werden kann, aber dennoch entfernt von diesem geschalten werden kann.

Ein weiterer Vorteil des Mechselstromschalters ergibt sich dadurch, dass zusätzlich zum Betätigungselement oder Trägerelement eine Fernbedienung vorgesehen ist, welche die Schaltvorgänge des Betätigungselementes für einen Verbraucher oder einer Gruppe von Verbrauchern bewirkt. Alle zuvor beschriebenen Funktionen können somit auch durch eine Fernbedienung realisiert werden. Der Nutzer kann daher die Funktionen des Wecliselstromschalters bequem beispielsweise aus einem vom Wechselstromschalter entfernten Ort eines Raumes oder Bereiches nutzen und die Verbraucher schalten und steuern. Als Fernbedienung kann beispielsweise auch ein Mobiltelefon verwendet werden.

Hierbei kann die Fernbedienung mindestens eine der genannten Anxeigeeinrichtungen aufweisen, um deren Betätigung zu erleichtern und komfortabel zu gestalten.

In der Regel ist der erfindungsgemäße Wechselstromschalter für Blinde nicht geeignet, da für sie die Farben nicht erkennbar sind. Daher kann ein wesentliches Hilfsmittel des Wechselstromschalters sein, dass dieser anstelle der Farben oder zusätzlich zu den Farben unterschiedliche Audiosignale erzeugt, welche die jeweiligen Schaltzustände signalisieren. Die Audiosignale können sich somit in Klanghöhe und/oder Klanglänge und/oder Klangton unterscheiden. Damit wird eine Steuerung und Schaltung von Verbrauchern auch für Blinde ermöglicht.

Besonders komfortabel ist der Wechselstromschalter, wenn dieser bei jedem Schaltvorgang sowohl mindestens ein Farbsignal als auch eine korrespondierende Zeichenfolge ausgibt, welche die durch das Farbsignal repräsentierte Funktion bezeichnet. Diese Zeichenfolge kann dabei die durch das Farbsignal repräsentierte Funktion bezeichnen, indem diese durch ein kleines Display am Wechselstromschalter dargestellt wird.

Schließlich kann der Wechselstromschalter einen Berührungs-Näherungs- oder Bewegungssensor aufweisen, so dass der Wechselstromschalter durch Annäherung des Nutzers in Funktions- und Schaltbereitschaft setzbar ist.

Möglich wäre auch eine Ausbildung des Wechselstromschalters mit einem runden Betätigungselement, das zum Wippen in mehreren Richtungen geeignet ist. Hierfür wären dann andere Bezugspunkte zu definieren, beispielsweise nach Art eines Uhrenzifferblattes. So können beispielsweise die "Kanten" als 3, 6, 9 und 12 Uhr bezeichnet und entsprechend am Betätigungselement ausgebildet sein. In analoger Weise könnten die "Ecken" definiert werden.

Die Erfindung wird weiterhin gelöst durch ein Hausstromnetz, umfassend mindestens einen Mehrwegeschalter nach einem der erfindungsgemäßen Ansprüche.

Die Erfindung wird weiterhin gelöst durch ein Schiff, Kraftfahrzeug, Flugzeug, umfassend mindestens einen Mehrwegeschalter nach einem der erfindungsgemäßen Ansprüche.

Die Erfindung wird weiterhin gelöst durch ein Gebäude umfassend mindestens einen Mehrwegeschalter nach einem der erfindungsgemäßen Ansprüche.

Der der Erfindung zugrunde liegende Gedanke wird in der nachfolgenden Beschreibung anhand von zwei Ausführungsbeispielen, die in den Zeichnungen dargestellt sind, näher beschrieben. Die Zeichnungsfiguren zeigen in
Fig. 1 einen erfindungsgemäßen Mehrwegeschalter mit seinen Bediendimensionen in Verbindung mit einer Verbrauchergruppe
Fig. 2 eine Mehrzahl von Schaltern, mit abnehmbarer Betätigungsfläche 4, die über einen Zwischenspeicher (SS) untereinander kommunizieren
Fig. 3 Schalter und Steckverbindungen der selben Serie
Fig. 4 einen erfindungsgemäßen ersten Drehschalter
Fig. 5 einen erfindungsgemäßen zweiten Drehschalter bzw. Taster
Fig. 6 den erfindungsgemäßen zweiten Drehschalter bzw. Taster mit Farbnomenklatur und
Fig. 7 mehrere erfindungsgemäße zweite Drehschalter bzw. Taster mit Farbnomenklatur nebeneinander angeordnet

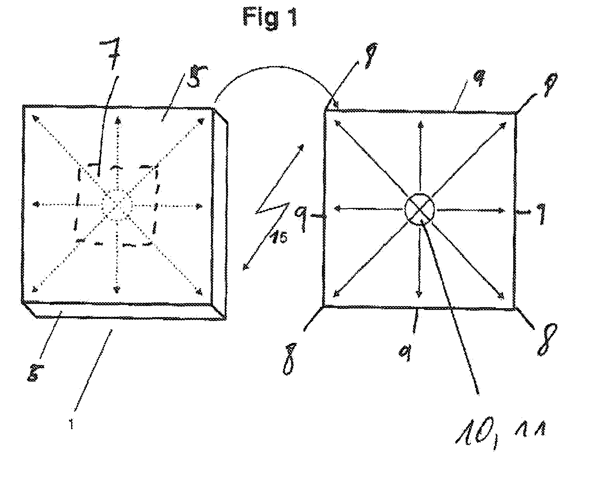

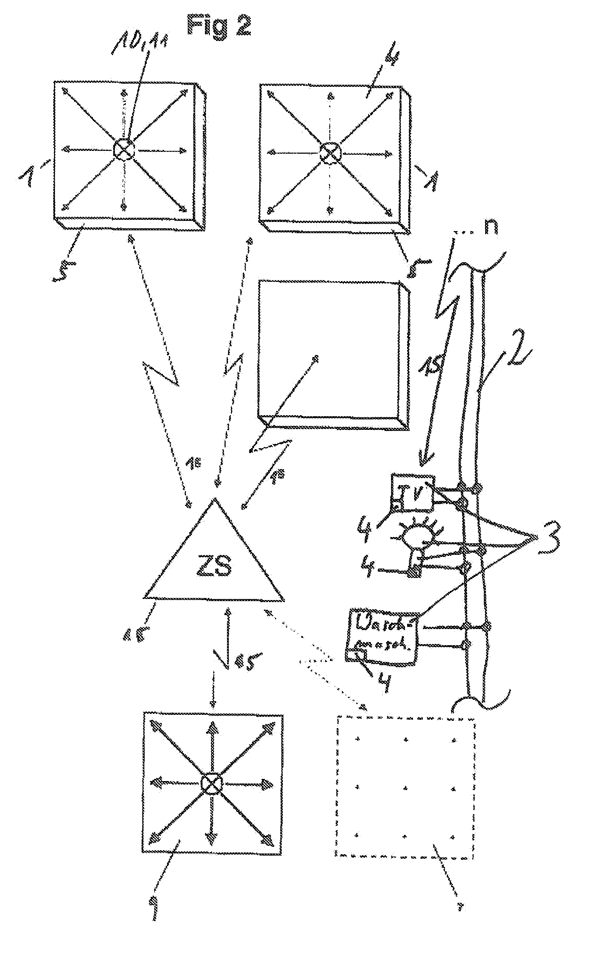

Der Mehrwegeschalter 1 gemäß den Fig. 1 bis 7 ist an einer Wand eines Raumes angebracht und direkt oder mit Hilfe von Fernkommunikationsmitteln 15, wie z.B. per Infrarot/Bussystem oder per Funk an ein Gebäudestromnetz 2 angeschlossen. Darüber hinaus ist der Mehrwegeschalter 1 über das Gebäudestromnetz 2 mit einer Anzahl von elektrischen Verbrauchern 3 verbunden, die in Fig. 2 symbolhaft dargestellt sind. Jeder Verbraucher 3 enthält ein codiertes Empfangselement 4, z.B. einen Mikrochip, zum Empfang der Schaltsignale des Mehrwegeschalters 1.

Der Mehrvegeschalter 1 weist ein Trägerelement 5 auf, an dem ein einziges zu bedienende Betätigungselement 6 angebracht ist, das mit einer dahinter eingebauten Steuerelektronik 7 in Kontaktverbindung steht. Die Ecken 8 der Betätigungselement 6 sind jeweils als Betätigungsflächen 9 ausgebildet, mit denen jeweils ein bestimmter 2u schaltender Verbraucher 3 oder -gruppe ausgewählt und geschaltet werden kann. Die Betätigungsflächen 9 und 13 sind in der Zeichnung symbolisiert durch die punktierten Linien.

Die obere linke Betätigungsfläche 9 in der Ecke s dient z.B. zum Auswählen für die Verbrauchergruppe "Lampen* zum Schalten von Lampen, die obere rechte Betätigungsfläche 9 in der Ecke 8 ist für die Verbrauchergruppe "Audio/Video" zum Schalten von elektronischen Unterhaltungsgeräten vorgesehen, die untere linke Betätigungsfläche 9 in der Ecke s dient zum Auswählen für die Verbrauchergruppe "Schatten" zum Schalten von Jalousien und die untere rechte Betätigungsflache 9 in der Ecke 8 ist für die Verbrauchergruppe "Sicherheit" zum Schatten für die Alarmanlage vorgesehen, wie diese die nachfolgende Tabelle verdeutlicht.

**(Tabelle 2)**

| Ecke | Verbrauchergruppe |
|---|---|
| Oben links | Beleuchtung (Lampen) |
| Oben rechts | Audio/Video (Fernseher, CD-PLayer usw.) |
| Unten links | Schatten (Jalousien) |
| Unten rechts | Sicherheit (Alarmanlage) |

Mit den einseinen Betätigungsflachen können nachfolgend genannte Schaltfunktionen an den elektrischen Verbrauchern bewirkt werden:

**(Tabelle 1)**

| Kante | Funktionen |
|---|---|
| Oben | plus, heller, höher, mehr, lauter, wärmer |
| Unten | minus, dunkler, tiefer, weniger, leiser, kälter |
| Links | links, zurück, letztes |
| Rechts | rechts, weiter, nächstes |

Diese Tabellen sind nur beispielhaft, wobei die Betätigungsflächen auch in anderer Weise zugeordnet sein können.

In Fig. 1 ist darüber hinaus dargestellt, daß die Betätigungsplatte 6 auch als vom Trägerelement 5 trennbar vorgesehen werden kann. In einem derartigen Fall wird die Kommunikation zwischen Betätigungsplatte 6 und Trägerelement 5 mit Hilfe von Fernkommunikationsmitteln 15 sichergestellt*

Im Zentrum 10 des Betätigungselements 6 ist ein Taster 11 {in Fig. 1, 2 schematisch durch einen Kreis mit einem Kreuz darin dargestellt) angeordnet, der als Betätigungsfläche dem Schalten von Verbrauchern 3, insbesondere von Schsitgrundfunktionen, wie "An/Aus", "Start/Stopp" usw. des momentan aktiven elektrischen Verbrauchers 3 oder der momentan aktiven Verbrauchergruppe 3 gemäß Tabelle 1 dient.

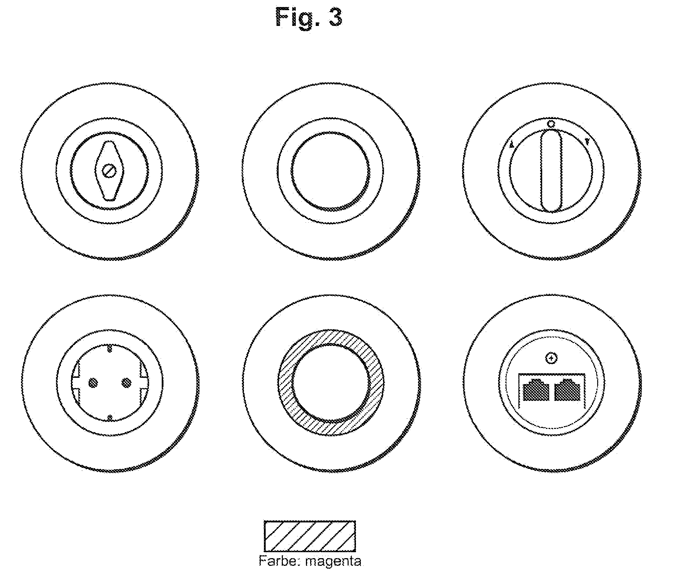

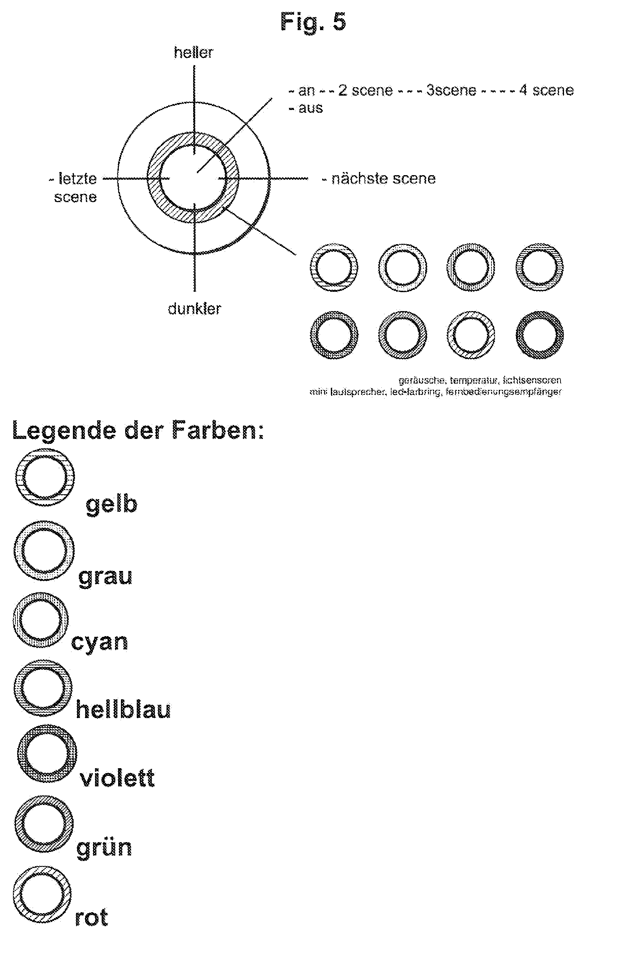

Der Taster 11 ist, wie insbesondere die Fig. 5 bis 7 verdeutlichen, erhaben, also aus der Bedienfläche der Betätigungselement 6 herausragend, ausgebildet. Gemäß Fig. 2. ist der Taster 11 ein. Taster, z.B. zum Auslösen eines Dauerimpulses an den zugehörigen aktiven Verbraucher. Der Taster 11 gemäß Fig. 3 hingegen ist ein Kippschalter zur Auslösung eines Schaltimpulses, z.B. AN/AUS, für den aktiven Verbraucher.

In den dargestellten Ausführungsbeispielen ist ein Teilbereich der Frontfläche des Tasters 11 beleuchtet, vorzugsweise farblich beleuchtet. Hierbei sind die Farben gelb, grau, dunkelblau, hellblau, violett, grün, rot fest Verbrauchergruppen, wie Schall/Geräusche; Temperatur; Licht; Klima; Sicherheit etc. direkt zugeordnet

Weiterhin sind an den vier Seiten des Betätigungselement 6 deren Kanten 12 zum Auslösen von schaltvorgängen für Verbraucher 3, wobei die Kanten 12 entsprechende Betätigungsflächen 13 aufweisen. Durch Betätigen beispielsweise der Betätigungsfläche 13 der rechten Kante des Betätigungselements 6 werden die Schaltfunktionen "rechts, weiter, nächstes" ausgelöst. Bei Betätigung der anderen Betätigungsflächen 13 der Kanten 12 werden die in Tabelle 2 genannten Schaltfunktionen ausgeführt.

Darüber hinaus kann im Zentrum 10 der Betätigungselement ein Anzeigedisplay 14 im Taster 11 vorgesehen sein, auf welchem unterschiedliche Farben, Ziffern und andere Informationen, wie Temperatur, Uhrzeit, Schaltsaenen, Bedienmodi und dergleichen darstellt werden.

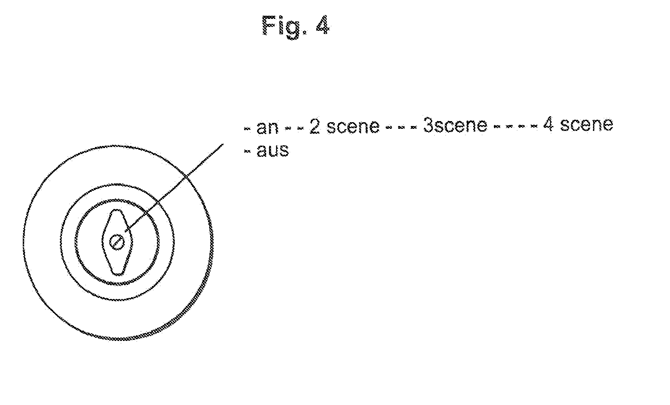

Fig. 4 zeigt einen erfindungsgemäßen Drehschalter, der im wesentlichen die selben Punktionen umfasst, wie der in den Fig. 1 und 2 dargstellte Schalter. In diesem Fall werden die beschriebenen Funktionen statt an unterschiedlichen Stellen des Schalters, wie es für die Schalter aus der Fig. 1 und 2 beschrieben ist mit Hilfe des drehbaren Betätigungselements des Drehschalters eingegeben. Optional kann dieser Drehschalter auch zusätzlich noch eine Tastfunktion umfassen.

In diesem Fall des Drehschalters werden die diversen Eingaben mit Hilfe der mechanisch vordefinierten. Raststellungen des Betätigungselements 6 eingegeben. Die in Fig. 4 beispielhaft dargestellten und mit an/aus; Szene 2; Szene 3; Szene 4 bezeichneten/ vier unterschiedlichen Raststellungen, sind können auf diese Weise die vier Eingabedimensionen aus Fig. 1 und 2 abdecken.

Darüber hinaus kann auch mit Hilfe des Drückens auf den Drehschalter eine weitere Eingabedimension eröffnet werden. Natürlich sind durch mechanische Veränderungen die Rastpositionen auch veränderbar. So können auch Drehschalter mit einer beliebig höheren oder geringeren Anzahl an radialen Rastpositionen hergestellt werden, die dann mit einer entsprechenden Anzahl an Szenen belegbar sind.

Natürlich kann der Drehschalter, z.B. in seinem Zentrum auch mit einem Anzeigeorgan ausgestattet werden, welches mit Hilfe von Lichtsignalen dem Bediener anzeigt, welche Szene gerade geschalten ist,

Fig. 5 zeigt einen erfindungsgemäßen Taster, der im wesentlichen die selben Funktionen umfasst, wie der in den Fig. 1 und 2 dargstellte Schalter. In diesem Fall werden die beschriebenen Funktionen statt an unterschiedlichen stellen des Schalters, wie es für die Schalter aus der Fig. 1 und 2 beschrieben ist mit Hilfe einer Tastbetätigung des Betätigungselements 6 eingegeben. Optional kann dieser Taster auch zusätzlich noch eine Drehfunktion umfassen.

In diesem Fall des Tasters werden die diversen Eingaben mit Hilfe der einzugebenden Tastsignale Betätigungselements 6 eingegeben. Die in Fig. 5 beispielhaft dargestellten und mit an/aus; Szene 2; Szene 3; Szene 4 bezeichneten vier unterschiedlichen Tastsignale können auf diese Weise die vier Eingabedimensionen aus Fig. 1 und 2 abdecken.

Darüber hinaus ist in den Fig. 57 zwischen der Betätigungsfläche 9 des Tasters und dessen Trägerelement 5 ein ringförmiges Beleuchtungselement angeordnet, welches in diversen Farben leuchten kann. Besonders bevorzugt sind die Farben gelb, grau, dunkelblau, hellblau, violett, grün, rot.

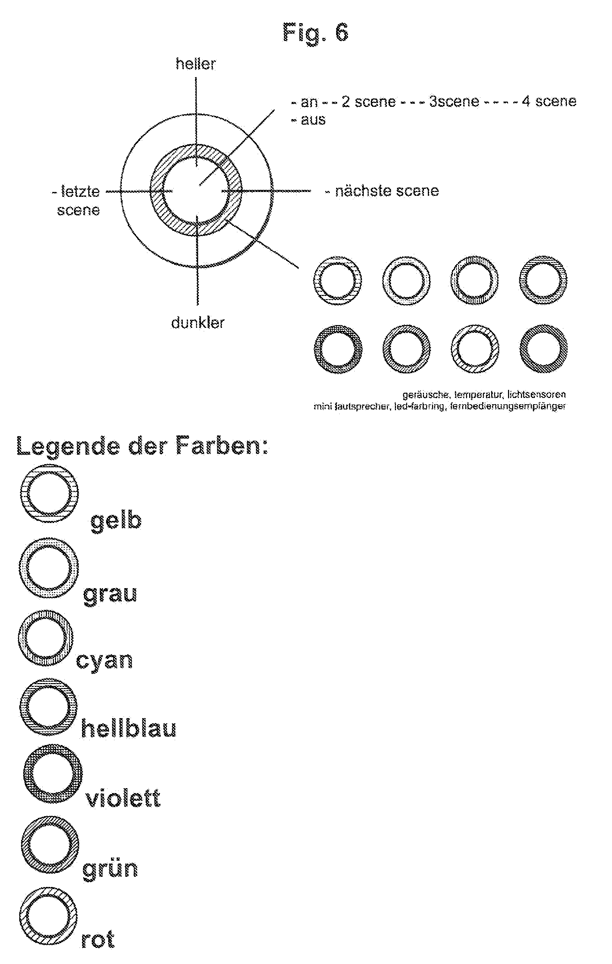

Fig. 6 zeigt den gleichen Taster, wie Fig. 5, bei welchem jedoch zusätzlich der Ort der Betätigung, also der Ort der Eingabe des Tastsignals als Informationsträger erkannt wird, im Fall, daß man sich im Lichtmodus befindet, der beispielsweise durch ein gelbes Leuchten des ringförmiges Beleuchtungselements angezeigt wird, bewirkt eine Betätigung des oberen Teils des Tasters eine Erhöhung der Helligkeit, eine Betätigung des unteren Teils des Tasters eine Verdunklung und eine Betätigung des linken Teils ein Zurückschalten in die letzte Szene und ein Betätigen des rechten Teils ein Verschalten zur nächsten Szene, der im wesentlichen die selben Funktionen umfasst, wie der in den Fig. 1 und 2 dargstellte Schalter. In diesem Fall werden die beschriebenen Funktionen statt an unterschiedlichen Stellen des Schalters, wie es für die Schalter aus der Fig. 1 und 2 beschrieben ist mit Hilfe einer Tastbetätigung des Betätigungselements 6 eingegeben. Optional kann dieser Taster auch zusätzlich noch eine Drehfunktion umfassen.

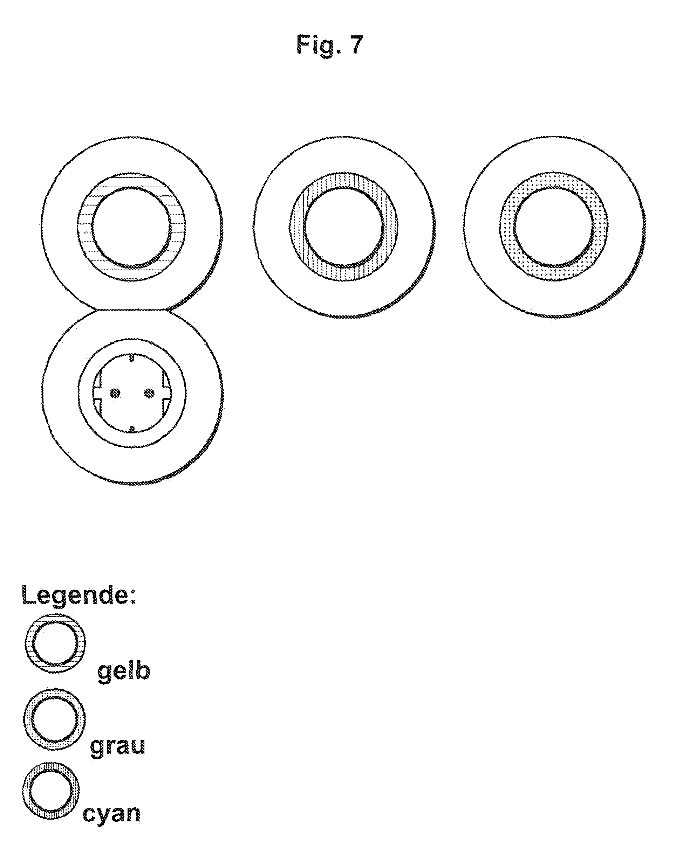

Fig. 7 zeigt die gleichen Taster, wie Fig. 5 und 6, die sich jedoch in unterschiedlichen Funktionsmodi befinden. Der linke Taster zeigt mit Hilfe seines gelben Rings an, daß er sich gerade in einem ersten Modus, z.B. im Lichtmodus befindet. Der mittlere Taster zeigt mit Hilfe seines grauen Rings an, daß er sich gerade in einem 2weiten Modus befindet. Der rechte Taster 2eigt mit Hilfe seines blauen Rings an, daß er sich gerade in einem dritten Modus, z.B. im Klimamodus befindet.

### Liste der Bezugszeichen

- 1: Schalter
- 2: Gebäudestromnetz
- 3: Verbraucher
- 4: Empfangselement
- 5: Trägerelement
- 6: Betätigungselement
- 7: Steuerelektronik
- 8: Ecks
- $: Betätigungsfläche
- 10: Zentrum
- 11: Taster
- 12: Kante
- 13: Betätigungsflache
- 14: Äxi2eigedisplay
- 15: Fernkommunikationsmittel
- 16: ringförmiges Leuchtelement

## Patentansprüche

1. Mehrwegeschalter umfassend eine Steuerelektronik zum Bewirken von Zustandsänderungen von mit jeweils einem individuellen Empfangselement (4) versehenen elektrischen Verbrauchern (3) in einem Gebäudestromnetz (2), wobei der Mehrwegeschalter (1) ein Trägerelement (5), aufweist, sowie zumindest ein zu bedienendes Betätigungselement (6) das eine Mehrzahl von Betätigungsflachen (9, 13) umfasst, wobei das Betätigungselement beweglich auf dem Trägerelement (5) angebracht ist, und wobei das Betätigungselement (6) relativ zum Trägerelement bewegbar ist, und wobei jede Betätigung des Betätigungselements (6) mindestens einen Schaltvorgang für mindestens einen der Verbraucher (3) oder mindestens eine Gruppe von diesen Verbrauchern bewirkt, und wobei sämtliche Schaltvorgänge, an dem mindestens einen Verbraucher (3) oder an der mindestens einen Gruppe von Verbrauchern durch lokale Betätigung einer der Betätigungsflächen (9, 13) auslösbar sind, und wobei der Schalter unter mehr als einer der Betätigungsflachen (9, 13) eine sequentiell andersfarbige Beleuchtung auszugeben in der Lage ist und wobei eine jede dieser Beleuchtungsfarben mit Hilfe der Steuerelektronik einem Schaltzustand fest zuordenbar ist.

2. Mehrwegeschalter nach Anspruch 1 wobei im Zentrum (10) des Betätigungselements (6) eine weitere Betätigungsfläche (13) angeordnet ist

3. Mehrwegeschalter nach Anspruch 2 wobei, das Betätigungselement im Zentrum erhaben, oder erhaben und sequentiell andersfarbig beleuchtbar ausgebildet ist.

4. Mehrwegeschalter nach einem der zuvor genannten Ansprüche, wobei der im Zentrum (10) der Betätigungselement (6) angeordnete Taster (11) für eine andere Impulsart, als der Kippschalter, ausgebildet ist.

5. Mehrwegeschalter nach einem der zuvor genannten Ansprüche, wobei der im Zentrum (10) der Betätigungselement (6) angeordnete Taster (11) ein Tastschalter, Wipptaster, Wippschalter oder dergleichen ist.

6. Mehrwegeschalter nach einem der zuvor genannten Ansprüche, wobei das Betätigungselement (6) relativ zum Trägerelement (5) in mindestens drei Richtungen bewegbar ist.

7. Mehrwegeschalter nach einem der zuvor genannten Ansprüche, wobei der im Zentrum (10) des Betätigungselements (6) angeordnete Taster (11) unabhängig von der sequentiell andersfarbigen Beleuchtung zumindest teilweise illuminierbar ist.

8. Mehrwegeschalter nach einem der zuvor genannten Ansprüche, **dadurch gekennzeichnet, daß** das Trägerelement ein Illuminationselement aufweist.

9. Mehrwegeschalter nach einem der zuvor genannten Ansprüche, wobei der Schalter unter dessen mehr als einer Betätigungsflache eine sequentiell andersfarbige Beleuchtung ausgebbar ist, dies in einer Kombination der Farben der Gruppe schwarz, rot, magenta, grün, gelb, cyan, blau, weiss, grau, darzustellen in der Lage ist.

10. Mehrwegeschalter nach einem der zuvor genannten Ansprüche, wobei der Schalter unter dessen mehr als einer Betätigungsflache eine sequentiell andersfarbige Beleuchtung ausgebbar ist, dies in einer Kombination der Farben der Gruppe schwarz, RAL 3002_2; RAL 3015_3; RAL 6029_2; RAL 1017_7; RAL 5012_10; RAL 5017_07; RAL 016_12; RAL 7004, darzustellen in der Lage ist.

11. Mehrwegeschalter nach einem der zuvor genannten Ansprüche, wobei im Zentrum (10) der Betätigungselement (6) ein Anzeigedisplay (14) im Taster (11) angeordnet ist, das unterschiedliche Farben, Ziffern und andere Informationen, wie Temperatur, Uhrzeit, Schaltszenen, Bedienmodi und dergleichen darzustellen in der Lage ist.

12. Mehrwegeschalter nach einem der zuvor genannten Ansprüche wobei die Steuerungselektronik Schaltbefehle bereitstellt, welche mit Hilfe eines Schaltvorgangs des Mehrwegeschalters aktivierbar sind und welche zu dem individuellen Empfangselement eines elektrischen Verbrauchers übertragen wird und welche in diesem individuellen Empfangselement auswertbar sind, wobei im elektrischen Verbraucher der übertragene Schaltbefehl umsetzbar ist.

13. Mehrwegeschalter nach einem der zuvor genannten Ansprüche wobei die Übertragung der Schaltbefehle über das Gebäudestromnetz erfolgt.

14. Mehrwegeschalter nach einem der zuvor genannten Ansprüche wobei der Schaltbefehl den Befehl des An/Ausschaltens und/oder der Leistungssteigerung/Leistungsreduktion und/oder einer Steuerungsfunktion eines Betriebszustands des Verbrauchers repräsentiert.

15. Hausstromnetz, umfassend mindestens einen Mehrwegeschalter nach einem der zuvor genannten Ansprüche.
